(19) Europäisches Patentamt / European Patent Office / Office européen des brevets

(11) **EP 3 683 732 A1**

(12) **EUROPEAN PATENT APPLICATION**

(43) Date of publication:
**22.07.2020 Bulletin 2020/30**

(51) Int Cl.:
**G06N 3/04** *(2006.01)* **G06N 3/08** *(2006.01)*
**G06N 3/10** *(2006.01)*

(21) Application number: **19290004.1**

(22) Date of filing: **21.01.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **GrAI Matter Labs S.A.S.**<br>**75012 Paris (FR)**<br><br>(72) Inventor: **Chersi, Fabian**<br>**5656 AE Eindhoven (NL)**<br><br>(74) Representative: **V.O.**<br>**P.O. Box 87930**<br>**Carnegieplein 5**<br>**2508 DH Den Haag (NL)** |

(54) **SPARSE EVENT-BASED DEEP NEURAL NETWORKS**

(57) A neural network (100) for classifying a sequence of events (Ea,Eb) comprises a plurality of interconnected neurons (N) configured to receive respective input values (I) triggered by respective events (Ea,Eb) at different instances of time (ta,tb) in the sequence, and calculate respective output values (V) based at least in part on their input values (I). The neurons (N) include at least a first neuron (NI), configured to receive a first input value (I1) triggered by a first event (Ea) at a first instance of time (ta), and calculate a first output value (VI) dependent on the first input value (I1), wherein the calculation is triggered by a second event (Eb) at a second instance of time (tb).

FIG 1A

## Description

TECHNICAL FIELD AND BACKGROUND

The present disclosure relates to neural networks and their ability to process, e.g. classify, event-based sensor output. The disclosure also relates to a corresponding system and method for classifying events. Furthermore, the disclosure relates to methods of training the neural network.

Neural networks are computing systems which may serve as a framework for many different machine learning algorithms to process complex data inputs. Such systems may "learn" to perform tasks by considering examples, generally without being programmed with any task-specific rules. A neural network is based on a collection of connected units or nodes called neurons. Each connection, can transmit a signal from one neuron to another. A neuron that receives a signal can process it and then signal additional neurons connected to it. The output of each neuron is typically computed by some non-linear function of the sum of its inputs. The connections can have respective weights that adjust as learning proceeds. There may also be other parameters such as biases. Typically, the neurons are aggregated into layers. Different layers may perform different kinds of transformations on their inputs to form a deep neural network.

Event-based sensors, such as cameras, have the potential to offer significant advantages over their standard counterparts, e.g. higher dynamic range and lower latency. However, the output of event-based sensors is typically composed of a sequence of asynchronous events which may complicate data processing. Furthermore, the output of an event-based sensor may be very sparse, e.g. carry information on only a small subset of its sensor elements. For example, an event-based camera does not output full size images at a fixed frame rate, but outputs events representing changes in pixel luminosity of only one (or a few) of its pixels, at the moment that the change is registered.

These and other issues make it currently infeasible to process event-based sensor data using standard neural networks. For example, a neural network for processing images may use an input layer with separate neurons for each pixel in the image. Accordingly, it relies on the availability of the full image for classification. It cannot process input data of a single pixel change arriving asynchronously at only one input neuron. And even if the network could process such data, it would require a massive amount of processing power to keep up with the stream of events.

There is yet a desire for improvements of neural networks while alleviating current issues, e.g. in the classification of event-based sensor data.

SUMMARY

In one aspect, the present disclosure provides a neural network for processing, e.g. classifying a sequence of events. In another or further aspect the disclosure provides a corresponding system, e.g. incorporating the neural network with an event-based sensor device. In another or further aspect the disclosure provides a corresponding method, e.g. using the neural network. In another or further aspect the disclosure provides a method for training the neural network, e.g. to learn classifying or otherwise processing the events. In another or further aspect the disclosure provides a software medium with instructions to perform such methods.

As described herein the neural network may include one or more neurons configured to receive an input value triggered by an event at a first instance of time, and calculate -triggered by a second event at a second instance of time, or when evaluated at a subsequent time- an output value, which may be dependent on the input value of the first event. The neuron described herein may also be referred to as a 'time-dependent neuron' or 'temporal neuron'. The temporal neuron, which did not itself receive input at the second instance of time, can nevertheless be triggered to provide an output which is dependent on its previous input. For example, the output can be based directly or indirectly on the previously received input, the previously calculated output, or any state of the neuron which was changed as a result of the previous input.

It will be appreciated that the ability of the temporal neuron to provide output based on previous values may enable advantageous new application of neural networks which are otherwise not feasible. This type of network may also be referred to as a (deep) temporal neural network. For example, the temporal neural network can be applied to analyze or classify input from an event-based sensor. Advantageously, the sensor output may be asynchronously received by the neural network and processed as it arrives. The network input may be very sparse, e.g. wherein only a few or even a single input neuron receives an input value at any specific time. For example, this sparse input may be processed using time evolved values of neuron outputs which were previously triggered and which are indirectly connected to the current triggered neuron (e.g. via the common subsequent neuron). In this way previous values may be combined with current values to calculate the output of subsequent neurons.

BRIEF DESCRIPTION OF DRAWINGS

These and other features, aspects, and advantages of the apparatus, systems and methods of the present disclosure will become better understood from the following description, appended claims, and accompanying drawing wherein:

FIG 1A illustrates an arrangement of interconnected neurons which may form (part of) a neural network;
FIG 1B illustrates possible input and output signals at various stages of the neural network;
FIG 2A illustrates another or further arrangement of interconnected neurons;
FIG 2B illustrates an arrangement of interconnected neurons;
FIG 3 illustrates a (deep) neural network which may include temporal neurons, in one or more layers, as described herein;
FIG 4 illustrates a system for classifying a sequence of events
FIGs 5 and 6 illustrate possible example implementations of a temporal neuron.

DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between components such as neurons is described, this connection may be established directly or through intermediate components such as other neurons or logical operations, unless specified otherwise or excluded by the context.

In some embodiments, as described herein, a temporal neuron may take a spike or combination of spikes as input, and output a continuous-time signal that encodes the spike input in time in a useful way. The continuous-time signal can be linear or non-linear, and may be generated and instantiated by an analog or digital or mixed-signal circuit, or a look-up table, or by software computation. For example, the spike may be characterized as a delta function $\delta(t)$, or it may have a non-unitary amplitude $k\delta(t)$ where $k$ is a gain value applied at the source. In some embodiments, the general form of the neuron can be written as:

$$y(t) = f\left(\sum_{i=1}^{L} w_{ji} k_j \delta(t - t_j)\right)$$

where $f()$ is the continuous time function; $\delta(t - t_j)$ is the incoming spike at time $t_j$ from neuron $j$; $k_j$ is the non-unitary amplitude of the spike from neuron $j$; and $w_j$ is the weight by which the spike from $j$ is multiplied.

In principle, the function $f()$ can take many different forms. In some computations it may be advantageous that this function is monotonically decreasing, so as to provide an unambiguous relationship between the amplitude of $f()$ and the passage of time. Suitable functions e.g. include exponential decay functions, or linearly decrementing functions. In other computations it may be more suitable for $f()$ to have its peak energy (amplitude) at some point later in time after the spike. For example, this could be an alpha function, or Gaussian bump.

It will also be appreciated that exponential functions form a valid set of orthogonal basis functions for Fourier synthesis of any arbitrary function in time, and so having a working implementation of the neuron using exponential decay functions, an ensemble of neurons which receive the same input spike, but have different time constants ($\tau$) can synthesize any arbitrary function in time as desired.

The behavior of a temporal neuron can be described as the combination of an instant response G() also referred to as the input response function, and a long term response F() that is a function of time, also referred to as the time response function. In mathematical terms this can be written as follows (having solved the differential equations for convenience):

$$\begin{cases} V_j(t) = F(t) \cdot G[I_j(t^*)] \\ I_j(t) = \sum_i w_{ij} \cdot k_i \delta_i (t - t_i) \end{cases}$$

where $V_j(t)$ is the neuron output also referred to as membrane potential, $F(t)$ is the time response function also referred to as time evolution equation, $I_j(t)$ is the total input at time $t$, G() is the response function to the input, $w_{ij}$ is the weight between neuron $i$ and neuron $j$, $k_i \delta_i$ is the scaled spike. It will be appreciated that G() may only need calculation at specific times t*. The choice of which time can be is guided e.g. by optimality criteria such as minimizing the amount of computations.

Depending on the application, it may be desired for the continuous time signal to accumulate the effect of multiple spike inputs, or to reset to an initial value on receipt of each spike. Accumulating the effects of multiple spikes can have advantageous application e.g. in cases where information is encoded partially or wholly in the rate of spikes, or in the intervals between them. The amplitude of the output signal increases or in other ways represents an accumulated value of the input spikes, moderated in time by the decay or time development of the function $f(t)$. Alternatively, or in addition, resetting to an initial value can also have advantageous applications e.g. in providing an unambiguous relationship between the current value of the neuron output and the duration of time since the spike arrived at the neuron (in the case where f(t) is monotonic in time), and it is computationally simpler as the initial value (and likely the peak value) of neuron output is always the same. It also does not require an additional additive operation in the neuron process.

Also combinations are envisaged. For example, a neural network may comprise both "accumulating" and "resetting" neurons. This may provide the synergetic advantages of either applications. Alternatively, or in addition, one or more neurons may switch behavior, e.g. as part of a learning process to determine the best (classification) performance. Alternatively, or in addition, a neuron may exhibit a hybrid behavior wherein the value is partially reset, e.g. takes on a weighted average of the previous accumulated value and the new input value. For example, the weight may be smoothly varied as part of the learning process to prevent discontinuities.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

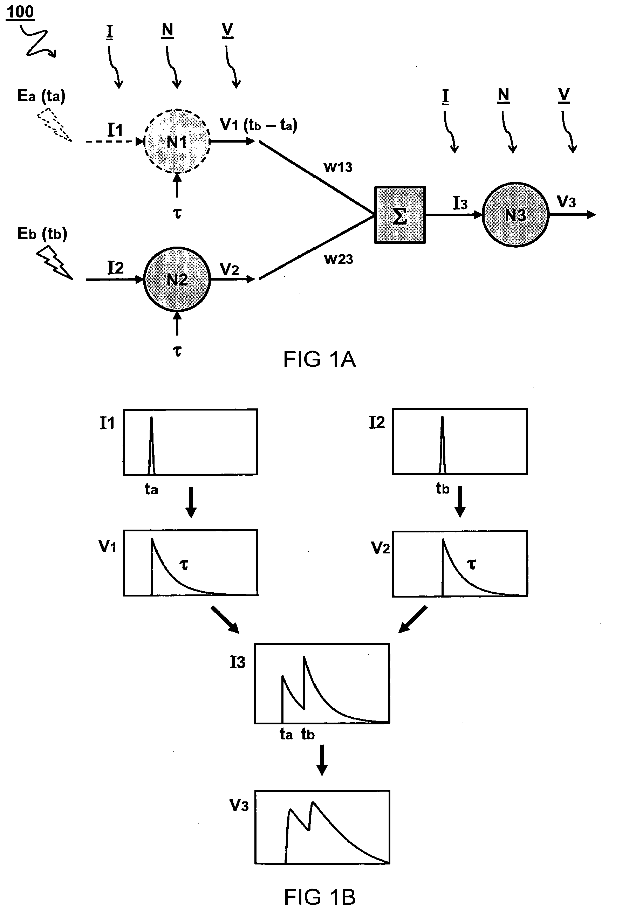

FIG 1A illustrates an arrangement of interconnected neurons "N" which may form (part of) a neural network 100.

In some embodiments, the neural network 100 is configured to classify a sequence of events "Ea" and "Eb". Typically, the neural network 100 comprises a plurality of interconnected neurons "N". The neurons "N" may be configured to receive respective input values "I". For example, the input values may be triggered by respective events "Ea" and "Eb" at the same or different instances of time "ta" and "tb" in the sequence. Typically the neurons "N" may be configured to calculate respective output values V based at least in part on their input values "I".

In one embodiment, e.g. as shown, the neurons "N" include at least a first neuron "N1" configured to receive a first input value "I1" triggered by a first event "Ea" at a first instance of time "ta", and calculate a first output value "V1" dependent on the first input value "I1". In a preferred embodiment, the first neuron "N1" is configured to allow the calculation to be triggered by a second event "Eb" at a second instance of time tb which may be different from the first instance of time "ta".

In some embodiments, e.g. as shown, the neurons "N" include at least a second neuron "N2" configured to receive a second input value "I2" triggered by the second event "Eb" and calculate a second output value "V2", based on the second input value "I2". In other or further embodiments, e.g. as shown, the neurons may include a third neuron "N3". The third neuron may be configured to receive a third input value "I3" which is based on the respective output values V1, V2 of at least the first and second neurons "N1" and "N2". In a preferred embodiment, the first output value "V1" is calculated, triggered by the second event "Eb", based on a time period (tb-ta) between the first and second instances of time "ta" and "tb". In another or further preferred embodiment, the second output value "V2" may be calculated independent of time. For example, the second neuron "N2" may simply calculate the instantaneous response since its input value "I2" is associated with the instance of time "tb" that triggered the input.

In some embodiments, e.g. as shown, one or more outputs V1, V2 of the preceding neurons "N1" and "N2" in the network 100 may be multiplied by respective (variable) weights w13,w23 before being fed as input to one or more subsequent neurons ""N3" in the network. In other or further embodiments, the (weighted) outputs may be summed (indicated here by the block "Σ"). In other or further embodiments, variable offset or bias values (not shown) may be added to the outputs V1, V2 before or after summation. For example, the weights and/or offsets may be varied as part of a learning or training of the neural network.

Of course, while the present figures show the outputs V1, V2 of preceding neurons "N1" and "N2" being combined before fed into the subsequent neuron "N3" as a single input I3, the same thing may also be conceptualized as the subsequent neuron "N3" receiving two inputs from the preceding neurons "N1" and "N2". For example, the summation may be considered as part of the functionality of the neuron "N3". Such variations of representation are considered well within the present teachings.

In some embodiments, the output of the sensor or input to the neural network may include a timestamp "ta" or "tb" indicating a time at which a respective event "Ea" or "Eb" was registered. The time stamp may be generated, e.g. on the basis of a clock which is consulted at the time of the event. The clock may, e.g., be integrated in the sensor or part of a separate readout device between the output of the sensor and the input of the neural network. The clock may also be integrated in the device constituting the neural network, e.g. a computer clock which is accessible to a processor executing a neural network program.

In some embodiments (not shown), the network includes one or more neurons which output a constant value irrespective of the time the respective neuron is triggered. In other words, the output of the neuron may persist indefinitely, or at least until it receives another input value. The presence of persistent neurons in the network may be advantageous e.g. where the classification depends on the occurrence of a rare event. Also other applications may be envisaged.

FIG 1B illustrates an embodiment of possible input and output signals at various stages of the neural network, e.g. as shown in FIG 1A.

In some embodiments, e.g. as shown, the network includes one or more neurons whose output changes as a function of time, e.g. a time period since the respective neuron was triggered. In other words, the output of the neuron may be different at different times depending when its output is requested, e.g. triggered by a subsequent event. This may also be referred to as a time-dependent or temporal neuron. The presence of time-dependent neurons in the network may be advantageous e.g. where the classification depends on the timing between different events. Also other applications may be envisaged.

In some embodiments, the calculation involves a time response function which takes a time stamp "tb" of the current event "Eb" as input, and calculates the current output value "V1" of a previously triggered neuron "N1". In other or further embodiments, the calculation may depend on one or more previous received input values "I1" corresponding to one or more previous events "Ea". For example, the current output value is determined by a previously input "I1" corresponding to a previous event "Ea" and a previous time stamp "ta" with a time difference tb-ta with the time stamp "tb" of the current event "Eb".

In some embodiments, the calculation of the first output value "V1" is based on a time period (tb-ta) between the first and second instances of time "ta" and "tb". In a preferred embodiment, the first output value "V1" monotonically decreases with a length of the time period (tb-ta). In another or further preferred embodiment, the first output value "V1" exponentially decreases with the length of the time period (tb-ta).

In some embodiments, the calculation of the first output value "V1" is based on a time scale parameter "$\tau$" of the first neuron "N1". For example, the time scale may represent or correspond to a characteristic timing between different events. The time response may also include multiple time scales, e.g. two or more different time scale parameters for one or more neurons, two or more different time scale parameters between neurons within one layer of the neural network, or between different layers of the network.

In some embodiments, the length of the time period (tb-ta) may be linearly or non-linearly scaled by the time scale parameter, e.g. using (tb-ta)/$\tau$, or another function. For example, the time scale parameter "$\tau$" is a time constant associated with an exponentially decaying output of the neuron $V(t) = V(ta) \cdot \exp[ - (t-ta) / \tau]$. Of course also other time response functions may be envisaged such as linear decay. For example, in a linear decay the time scale parameter "$\tau$" may correspond to a slope of the decay. In some embodiments, the output value of a neuron may also increase, at least initially, after it is triggered. For example, the output may reach a maximum value after a fixed or variable period from the instance of time it was triggered.

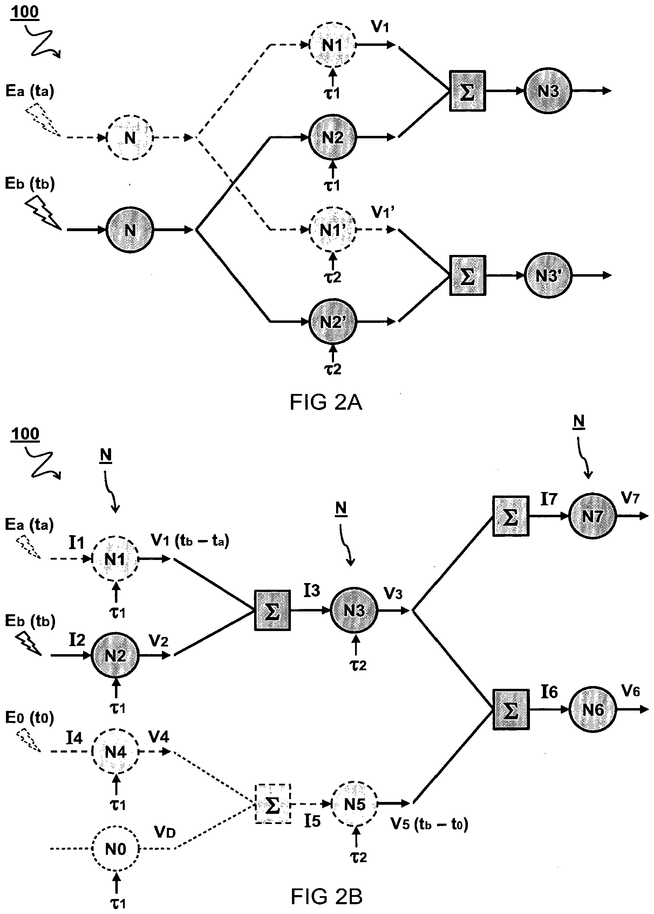

FIG 2A illustrates another or further arrangement of interconnected neurons "N".

In some embodiments, the calculation of one neuron output value V1 is based on a first time scale parameter "$\tau$1", and the calculation of another neuron output value V1' is based on a second time scale parameter "$\tau$2", different from the first time scale parameter "$\tau$1". In some embodiments, the neurons may be connected such that one input event "Ea" causes triggering of multiple subsequent neurons N1 and N1' configured to calculate respective output values V1,V1' based on different time scale parameters $\tau$1,$\tau$2. For example, this may be used to classify in parallel different events taking place on different time scales.

In some embodiments, one or more time scale parameters $\tau$1,$\tau$2 associated with the calculation of respective neuron output values V1, V1' are variable in a training of the neural network. Accordingly, the one or more of the time scales may be varied during the learning process to optimize the classification. Alternatively, one or more time of the scales may be predetermined, e.g. fixed or biased, or in another way manually guided, before or during the learning process. There can be one or more time scales per neuron, one or more time scales per layer, or one or more time scales for the whole neural network. When using multiple the time scales, they may also be covariant or otherwise inter-dependent. For example, a bias can be used in the learning process to prefer a particular dependence between the time scales.

In some embodiments, a particular class of events may be associated with a respective time scale (e.g. $\tau$) which may be fixed or variable in the training. Also other parameters determining a time response of a respective neuron may be variable in the training of the neural network. For example, the period until reaching a maximum value from the moment of triggering may be a training parameter. In this way a pair of neurons may be trained to provide a combined maximum output value when there is a specific time period between the events. For example, this may be used to distinguish a particular speed of movement.

In some embodiments, temporal neurons may be restricted to a specific layer in the neural network, e.g. the input layer, or one of the hidden layers. In other embodiments, the network may comprise temporal neurons in two or more different layers.

FIG 2B illustrates an arrangement of interconnected neurons. In one embodiment, e.g. as shown, the neurons "N" include at least a fourth neuron "N4" configured to receive a fourth input value "I4" and calculate a fourth output value V4 based on the fourth input value "14". In another or further embodiment, the neurons may include a fifth neuron "N5" configured to receive a fifth input value "I5" which is based at least on the fourth output value V4, and calculate a fifth output value "V5". In another or further embodiment, the neurons may include a sixth neuron "N6" configured to receive a sixth input value "16" which is based at least on the third and fifth output values "V3" and "V5".

In one embodiment, e.g. as shown, the fourth input value "I4" is triggered by a third event "E0" at a third instance of time "t0", preceding the first and second instances of time "ta" and "tb". Triggered by the second event "Eb", the fifth output value "V5" may be calculated based on a time period (tb-t0) between the third and second instances of time "t0" and "tb", and a state of the fifth neuron "N5" triggered by the third event "E0". In a preferred embodiment, this may be done without (re)calculating the fourth output value "V4" of the fourth neuron "N4". By using the state of the fifth neuron "N5" and not having to recalculate the preceding fourth neuron "N4", processing time may be saved, particularly if there are many preceding neurons in the chain. In other words, neurons at various positions in the chain may retain respective (time-dependent) states, and for each of such temporal neurons a new output may be directly calculated, when needed, without having to recalculate the values of preceding neurons in the chain.

In some embodiments, the neurons may be distributed over different layers of the neural network. For example, the first, second and fourth neurons "N1", "N2", "N4", may be attributed to a first layer, e.g. input layer or hidden layer; the third and fifth neurons ""N3", "N5", maybe be attributed to a second layer, e.g. hidden layer; and the sixth neuron "N6" may be attributed to a third layer, e.g. hidden layer or output layer.

In one embodiment, e.g. as shown, the fifth input value "15" of the fifth neuron "N5" may be further based on another preceding neuron N0. In some embodiments, the preceding neuron NO has not yet received any input, or received input a long time ago, and the neuron NO is configured to provide a default output value VD. For example, a neuron NO in the input layer may output a default value VD=0, or other value corresponding to "no output" from the sensor. Neurons in other layers of the network may output other default values.

In one embodiment, e.g. as shown, the third output value V3 of the third neuron "N3" may serve as basis for respective input values "16" and "17" of multiple succeeding neurons "N6" and "N7". Of course many more neurons and connections can be envisaged.

In one embodiment, e.g. as shown, the first and second neurons "N1" and "N2" in a first layer have an associated first time scale parameter "τ1" while the third neuron "N3" may have a second time scale parameter "τ2", which may be the same time scale or a different time scale. In general, different neurons may have different time response functions, particularly when they are in different layers. For example, where the calculation of neuron output values. In one embodiment, where the preceding one or more layers include a non-linear transformation of the respective input value, the time response function of neurons in the subsequent layer may be similarly transformed.

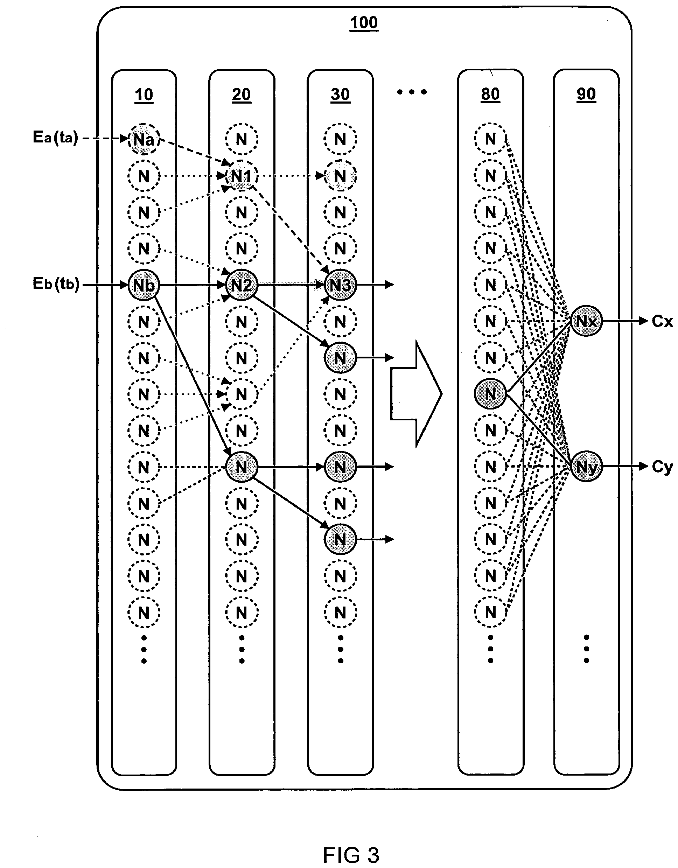

FIG 3 illustrates a (deep) neural network 100 which may include temporal neurons, in one or more layers, as described herein. Typically, a neural network 100, comprises a plurality of neurons "N". In a preferred embodiment, the neurons "N" are distributed over multiple layers 10-90, e.g. to form a deep neural network. Typically, such layers include an input layer 10, an output layer 90, and one or more one or more hidden layers 20,30 there between. For example, classification of events may comprise calculating output values "Cx" and/or "Cy" of neurons in the output layer 90 which may be based on a series of asynchronously received input values corresponding to a respective sequence of events "Ea" and "Eb" at different instances of time "ta" and "tb"

In one embodiment, the neural network 100 comprises an input layer 10 with neurons configured to receive input values corresponding to the sequence of events "Ea" and "Eb". In some embodiments, the input values may include a respective time stamps indicating when the respective event "Ea" or "Eb" was triggered, e.g. at what time "ta" and "tb" the event was registered by a sensor (not shown here).

In some embodiments, e.g. as shown, interconnections between the neurons "N" are formed exclusively across subsequent layers, e.g. between the input layer 10 and the first hidden layer 20, between the first hidden layer 10, and the second hidden layer 20, et cetera, up to the last hidden layer (not shown) and the output layer 90. Also other configurations of networks and connections may be envisaged.

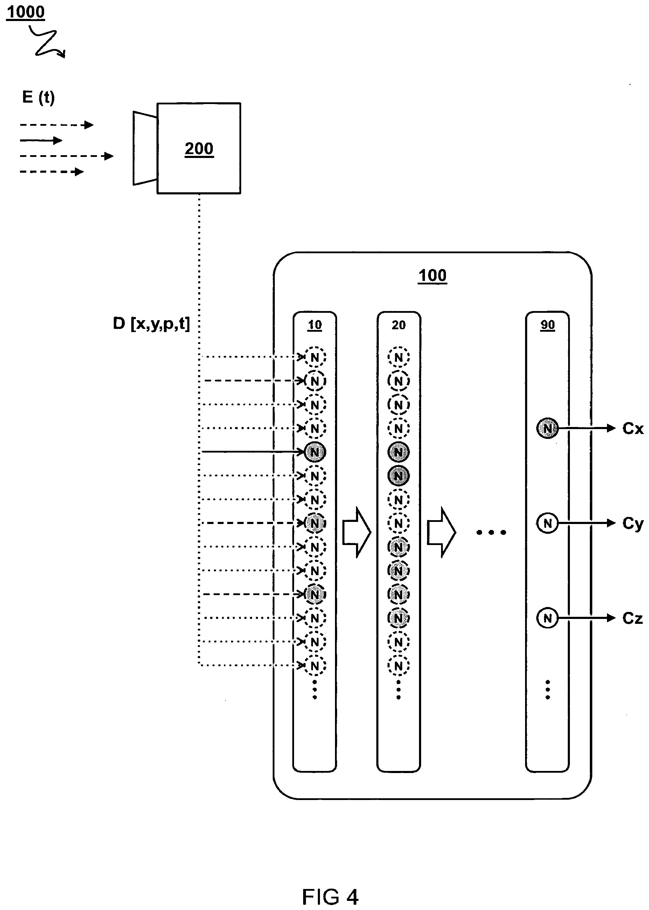

FIG 4 illustrates a system 1000 for classifying a sequence of events "E". In one embodiment, the system 1000 comprises a sensor device 200 configured to register sensor data "D" representing the series of events "E". In another or further embodiment, the system comprises or communicates with a neural network 100 as described herein. For example, neural network 100 is configured (and/or programmed) to receive the sensor data "D" from the sensor data "D", and process the sensor data "D" to calculate one or more classification values "Cx", "Cy",Cz representing a respective classification of the events "E".

In a preferred embodiment, the sensor device 200 is configured to determine a series of time stamps "t" representing a respective (relative) time that each event is (was) registered. These time stamps may form part of the sensor data "D" received by the neural network. In some embodiments, the time stamps may be determined by a (separate or integrated) readout device, e.g. between an output of the sensor device and an input to the neural network (not shown). For example, the readout device may have access to a time registration unit, e.g. clock, to link the registered events to specific points in time.

In some embodiments, the readout device is configured to convert full data registration into event-based data registration. For example, the sensor device may comprise a (conventional), e.g. pixel based, camera configured to register full images of a scene; and the readout device is configured to convert the full images into difference images, i.e. outputs data representing a difference between consecutive images such as a change in luminosity, color, or other property. For example, the sensor device may comprise a microphone configured to continuously register sound; and the readout device is configured to convert the continuous sound into a series of sound changes, i.e. outputs data representing a difference between consecutive sound bites such as a change in volume and/or pitch. For example, the sensor device may comprise a microphone configured to continuously register sound; and the readout device is configured to convert the continuous sound into a series of sound changes, i.e. outputs data representing a difference between consecutive sound bites such as a change in volume and/or pitch.

Many other types sensor devices may be envisaged. Also combinations of two or more sensors can be used as input to a neural network. The two or more sensors may be of the same type or different types. For example, a system for autonomous driving may comprise a number of cameras looking in different directions. The system may alternatively, or additionally comprise RADAR, LIDAR, and/or any other sensor device which may be mounted on a car; or be already part of the car such as the steering.

In some embodiments the sensor (or readout device) exclusively output data (e.g. in data packets) when an event is registered, and only for the respective sensor element(s) where the event is registered. For example, events received from a camera may comprise data packets D (x,y,p,t) including a position of a pixel (x,y) in the camera, a polarity (p) indicating whether a registered value on that pixel has increased or decreased, and a time stamp (t). Of course the data packets may be different for different types of sensors. In some embodiments, (the functionality of) the readout device may be integrated in the sensor device, or otherwise be considered part of the sensor device. Of course, it will be generally understood that device functionalities may be combined or split up over one or more physical devices. For example, the sensor device is an event-based sensor.

Typically, an event-based sensor may operate asynchronously. In some embodiments, the output of the event-based sensor is not dependent on a fixed clock interval. For example, input from the sensor may be received at any time, as soon as a new event occurs (within possible limitations of the device). An event may be defined, e.g., by a change of some state which is measured by the respective sensor. In principle, any type of sensor may be adapted to operate in this way, e.g. a camera, microphone, motion sensor, or other sensory device. For example, a camera based sensor may register a change in luminosity and/or color of light falling on of its sensing elements, e.g. pixels. For example, a microphone based sensor may register a change in loudness and/or pitch. For example, a motion based sensor may register a change in position, direction, tilt, et cetera.

In some embodiments, the sensor may employ a threshold to determine that a change of state has occurred. When the threshold is exceeded, the sensor may output a value indicative of a respective event. Because the event-based sensor does not have to wait, e.g., for a clock pulse, it may provide superior performance in a wide variety of applications which rely on rapid response such as autonomous systems, e.g. driving, or stock market exchange By making the threshold relatively small, the sensor more sensitive. This means various different sensor elements may be triggered in rapid succession. If this is combined with many different sensor elements, e.g. pixels in a camera, it could in principle result in a huge amount of sensor data. Since the sensor data may be very sparse, conventional processing may be inefficient.

In some embodiments, the output of the sensor and/or input to the neural network may be binary, e.g. to indicate that a change has (or has not) occurred for a specific sensor element, e.g. pixel. For example, the sensor may output a pulse spike (indicating e.g. binary value "one") for a respective sensor element only when it has registered an event, and not output anything (binary value "zero") when there is insufficient change. Alternatively, or additionally the sensor output or network input may include another (non-binary) numerical value indicating, e.g. the amount and/or type of change which was registered. This and other information may also be encoded e.g. as a combination of binary outputs in one or more output channels per respective sensor element.

In some embodiments, the network comprises a first set of respective input neurons which receive a pulse (binary one) when a sensor value for a respective sensor element increases. In other or further embodiments, the network comprises a second set of respective input neurons which receive a pulse (binary one) when the sensor value for that same respective sensor element decreases. For example, a neural network may be coupled to receive sensor information from a camera having "P" pixels, wherein the network comprises an integer multiple of "P" neurons in its input layer. For example, there may be two neurons per pixel to distinguish the occurrence of an increase or decrease of sensor value. There can also be more neurons per pixel, e.g. six neurons to register increase or decrease in value.

Based on the series of events registered by the sensor device, the neural network may classify the series of events, e.g. calculate a probability that the registered series of events, belongs to one (or more) of multiple classifications. For example, the probability for a respective classification may be determined as a (relative) output value from a respective neuron in the output layer, associated with that classification. In some embodiments, the classifications may be predetermined, and the neural network may be trained to recognized the classifications. In other embodiments, the neural network may itself determine a set of classifications that may then be labelled (unsupervised learning).

The classification values "Cx", "Cy", "Cz" may serve as input to further system components (not shown), e.g. in an autonomous system which may take action or present options based on the classification. The classification values "Cx", "Cy", "Cz" may also be simply output to a user interface reporting the event (not shown). In some embodiments, classification of a series of events may include classification of a type of movement or a direction of movement. For example, in an autonomous driving system, various maneuvers of other cars may be classified such as: accelerating, decelerating, turning left/right, et cetera. Of course the classifications may depend on the application of the system

It will be understood that the aspects of the present disclosure may also relate to corresponding methods of using a neural network, e.g. in a method for classifying events "Ea" and "Eb" by means of the neural network 100 as described herein. In one embodiment, the method comprises applying network input values associated with a sequence of events "Ea" and "Eb" to respective neurons "Na" and "Nb" at an input layer 10 of the neural network 100. In another or further embodiment, the method comprises calculating network output values "Cx" and "Cy" of respective neurons "Nx" and "Ny" at an output layer 90 of the neural network 100. For example, the network output values "Cx" and/or "Cy" may determine a respective classification of the sequence of events "Ea" and "Eb". In a preferred embodiment, the network input values include timestamps "ta","tb" corresponding to a time the respective event "Ea" or "Eb" is (was) registered, e.g. by a sensor.

In some embodiments, for a respective event "Eb", exclusively output values corresponding to a subset of neurons affected by the event "Eb", are calculated. This may be referred to as "depth first". Typically, the subset of neurons affected by an event "Eb" may be determined as those neurons whose output value (significantly) changes as a result of the event. In some embodiments, the subset may include -or exclusively consist of- a first degree chain of neurons defined as those neurons which are directly or indirectly descendent (by their preceding network connections) from a common input neuron (here "Nb"). In other words, the subset may include -or exclusively consist of- those neurons which are directly connected in successive layers 20,30 to the input neuron "Nb" where the event "Eb" is received (indicated herein by gray shading). For example, the input neuron "Nb" in the input layer is connected to a first set of neurons in the first hidden layer 20; the first set of neurons in the first hidden layer is connected to a second set of neurons in the second hidden layer 30; et cetera. These sets together may form the first degree chain of neurons.

In some embodiments, the subset may also include second degree neurons. For example, the second degree neurons may include -or exclusively consist of- those neurons which directly precede by their connections the first degree chain of neurons. For example, output values of the first degree chain of neurons may be affected by the outputs of the second degree chain of neurons. In some embodiments, the outputs of the second degree chain of neurons may be (re)calculated as a time-evolved value resulting from a previous event "Ea", e.g. using the respective timestamp "ta".

In some embodiments, outputs of at least some neurons in the second degree chain may be substantially unchanged or constant, e.g. unchanged compared to a minimum threshold, or zero, or some other fixed value. For example, no previous event was registered in that neuron, or its value has since (substantially) decayed. In some embodiments, neurons in the second degree chain whose value is substantially unchanged, may be excluded from the subset.

In some embodiments, the subset include neurons from all layers of the network. In other or further embodiments, multiple events "Ea" and "Eb" are accumulated in different neurons at one or more of the network layers 10-90 before the network output values "Cx" and/or "Cy" are calculated. This may be referred to as "width first". For example, two, three, five, ten, twenty, hundred, thousand, ten thousand, or more events may be accumulated in a layer before evaluating the succeeding layer(s), e.g. using time-evolved values according to the time stamps of the respective accumulated events. It will be appreciated, this may save significant processing time compared to evaluating each individual event.

In some embodiments, multiple events are accumulated in the input layer 10. This may typically be the layer with the most neurons and the corresponding data can thus be the most sparse. Accordingly, processing this data after it has accumulated may offer significant savings. Time evolution of the first layer may also be relatively simple. In some embodiments, multiple events are accumulated in the last hidden layer 80, i.e. directly before the output layer 90. Typically, the output layer 90 may be a fully connected layer. So to calculate the network output values "Cx" and/or "Cy", the values of all neurons in the last hidden layer 80 may need to be determined. So accumulating events in the last hidden layer 80 may also offer significant savings.

Also other layers can be used to accumulated events. Furthermore, also combinations may be envisaged where events are accumulated in two of more different layers. For example, a first number of events may be accumulated in one layer before the next layer is calculated; and a second, e.g. larger, number of events may be accumulated in another layer.

Aspects of the present disclosure may also relate to corresponding methods of training a neural network. In one embodiment, the method comprises classifying events "Ea" and "Eb" as described herein; and adjusting learning parameters of the neural network 100 to optimize the classification "Cx" or "Cy". In some embodiments, for a respective event "Eb", exclusively a subset of the learning parameters associated with a subset of the neurons affected by the event "Eb", is adjusted. For example, the learning parameters may include the weights of the connections between neurons, wherein the adjusting is restricted to the weights connecting the affected subset of neurons. It will be appreciated that in a sparse network, many neurons may be unaffected by any specific event; so updating only a subset of learning parameters can hugely increase efficiency.

Aspects of the present disclosure may also relate to a (non-transitory) computer-readable medium with software instructions that, when executed, causes performing the method as described herein, or forms a network or system as described herein.

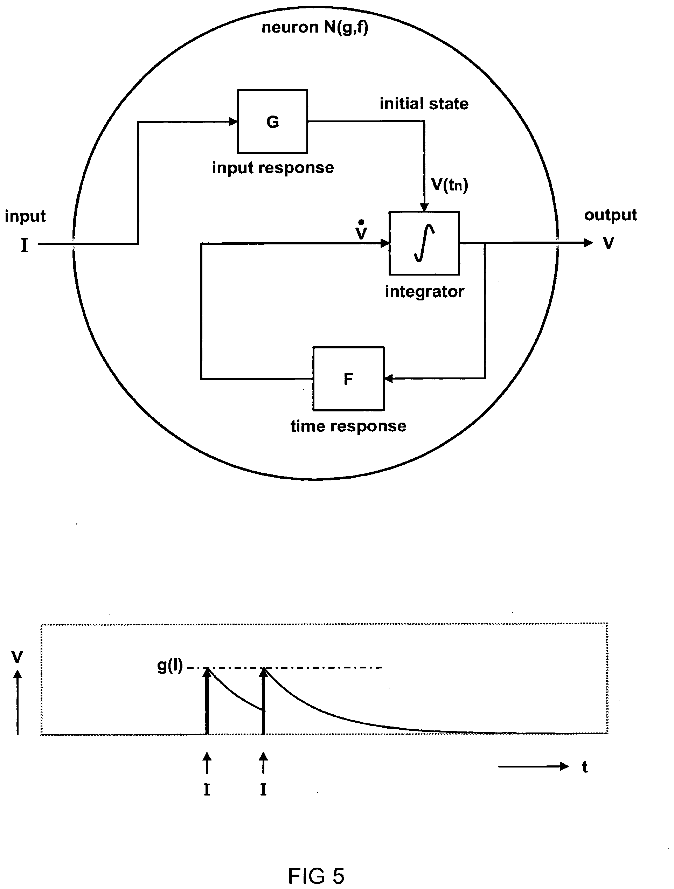

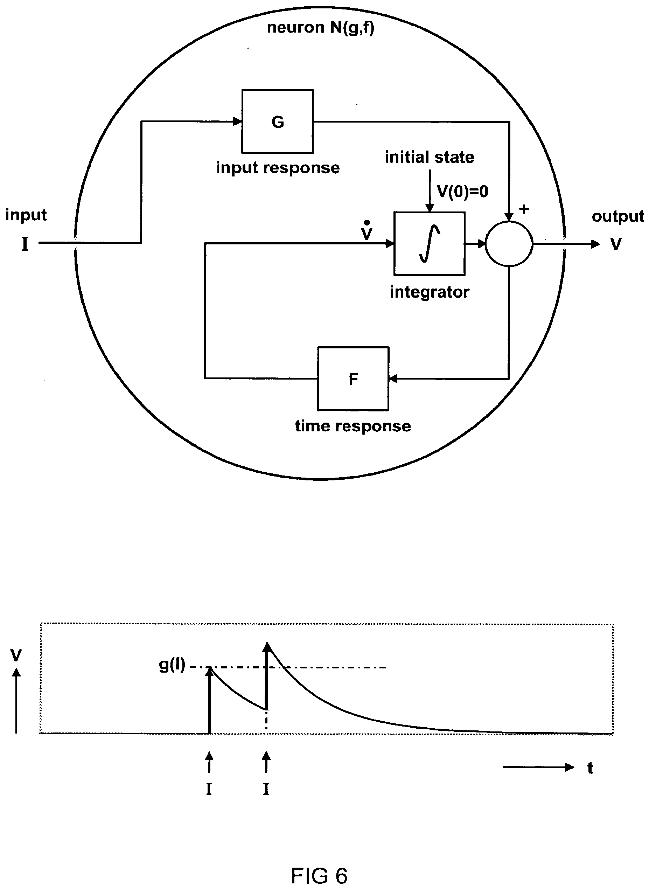

FIGs 5 and 6 illustrate possible embodiments of a temporal neuron N. The respective top parts illustrate block diagrams representing calculation of an output value V dependent on an input value "I". The respective bottom parts illustrate corresponding graphs of the output value "V" as a function of time "t", in this case resulting from successive events triggering inputs I on the same neuron.

In some embodiments, e.g. as shown, the input value "I" to a neuron is transformed by an input response function "G". For example, this can be a non-linear transformation applied to the input. In some embodiments, the input response function "G" may be the identity function, meaning, the neuron simply passes the input value "I" as an output value "V". For example, the non-linear transformation may additionally, or alternatively, be applied in another layer of the network preceding or succeeding the temporal neuron. In some embodiments (not shown), a non-linear transformation may be applied to the output V, e.g. after calculating the time response.

In one embodiment, e.g. as shown in FIG 5, the output of the input response function "G" sets an initial state $V(tn)$ of the neuron at the instance of time "tn" associated with the event triggering the input value "I". As shown on the corresponding graph, this causes the output value V to be reset each time it receives a new input I. Accordingly, this may be referred to as a 'resetting temporal neuron'. Such type of neuron may have advantages in that the time since the last event can in principle be unambiguously determined from the output value. For example, this can be used to classify events which are depend on specific relative timing, e.g. between neurons.

In another embodiment, e.g. as shown in FIG 6, the output of the input response function "G" is added to a previous state of the neuron. As shown on the corresponding graph, this causes the output value V to accumulate each time it receives a new input I. Accordingly, this may be referred to as an 'accumulating temporal neuron'. Such type of neuron may have advantages in that the history of previous events is not erased but may still contribute to the signal. For example, this can be used to classify events which are characterized by multiple inputs on the same neuron within a window determined by the respective time scale

In some embodiment, the output V of the temporal neuron is calculated using a time response function "f". For example, the time response function may determine a time evolution of the neuron output V after it is triggered. The time response function may include a respective gain $1/\tau$, or this may be calculated separately. In some embodiments, the time response function may include one or more (differential) equations relating the output at a first instance of time to another (later) instance of time.

For example, using the following differential equation to define the time response function $\tau \cdot dV/dt = -V$, may yields a response $Vt = V(tn) \exp[-(t-tn)/\tau]$, where "tn" may be the instance of time when the last event triggered the neuron, and "$\tau$" may be associated with a time scale parameter. In another example, the neuron may have a simple linear decaying output that can be easily calculated e.g. as $Vt = \max[0, V(tn) - t/\tau]$. Of course many other variations of the time response can be envisaged.

For the purpose of clarity and a concise description, features are described herein as part of the same or separate embodiments, however, it will be appreciated that the scope of the invention may include embodiments having combinations of all or some of the features described. For example, while embodiments were shown for various neuron configurations, also alternative ways may be envisaged by those skilled in the art having the benefit of the present disclosure for achieving a similar function and result. E.g. networks of neurons may be combined or split up into one or more alternative networks. The various elements of the embodiments as discussed and shown offer certain advantages, such as the processing of sparse asynchronous events. Of course, it is to be appreciated that any one of the above embodiments or processes may be combined with one or more other embodiments or processes to provide even further improvements in finding and matching designs and advantages. It is appreciated that this disclosure offers particular advantages to event based sensing, and in general can be applied for any application wherein input to a neural network arrives asynchronously.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

**Claims**

1. A neural network (100) for classifying a sequence of events (Ea,Eb), the neural network (100) comprising

   - a plurality of interconnected neurons (N) configured to

      o receive respective input values (I) triggered by respective events (Ea,Eb) at different instances of time (ta,tb) in the sequence, and
      o calculate respective output values (V) based at least in part on their input values (I);

   - wherein the neurons (N) include at least a first neuron (N1), configured to

      o receive a first input value (I1) triggered by a first event (Ea) at a first instance of time (ta), and
      o calculate a first output value (V1) dependent on the first input value (I1), wherein the calculation is triggered by a second event (Eb) at a second instance of time (tb).

2. The neural network according to claim 1, wherein the calculation of the first output value (V1) is based on a time period (tb-ta) between the first and second instances of time (tl,t2), and a time scale parameter ($\tau$) of the first neuron (N1).

3. The neural network according to any of the preceding claims, wherein the first output value (V1) exponentially decreases with a length of the time period (tb-ta) between the first and second instances of time (t1,t2).

4. The neural network according to any of the preceding claims, wherein the calculation of one neuron output value (V1) is based on a first time scale parameter ($\tau$1), and the calculation of another neuron output value (V1') is based on a second time scale parameter ($\tau$2), different from the first time scale parameter ($\tau$1).

5. The neural network according to any of the preceding claims, wherein the neurons are connects such that one input event (Ea) causes triggering of multiple neurons (N1,N1') configured to calculate respective output values (V1,V1') based on different time scale parameters ($\tau$1,$\tau$2).

6. The neural network according to any of the preceding claims, wherein the neurons (N) include at least

      o a second neuron (N2) configured to receive a second input value (12) triggered by the second event (Eb) and calculate a second output value (V2), based on the second input value (I2); and
      o a third neuron (N3) configured to receive a third input value (I3) which is based on the respective output values (V1,V2) of at least the first and second neurons (N1,N2);

   - wherein, triggered by the second event (Eb), the first output value (V1) is calculated based on a time period (tb-ta) between the first and second instances of time (ta,tb) while the second output value (V2) is calculated independent of time.

7. The neural network according to any of the preceding claims, wherein the neurons (N) include at least

      o a fourth neuron (N4) configured to receive a fourth input value (I4) and calculate a fourth output value (V4) based on the fourth input value (14);
      o a fifth neuron (N5) configured to receive a fifth input value (15) which is based at least on the fourth output value (V4), and calculate a fifth output value (V5);
      o a sixth neuron (N6) configured to receive a sixth input value (16) which is based at least on the third and fifth output values (V3,V5);

      - wherein the fourth input value (I4) is triggered by a third event (E0) at a third instance of time (t0), preceding the first and second instances of time (ta,tb);
      - wherein, triggered by the second event (Eb), the fifth output value (V5) is calculated based on a time period (tb-t0) between the third and second instances of time (t0,tb), and a state of the fifth neuron (N5) triggered by the third event (E0, without recalculating the fourth output value (V4) of the fourth neuron (N4).

8. A system (1000) for classifying a sequence of events (E), the system (1000) comprising

   - an event-based sensor device (200) configured to register sensor data (D) representing the series of events (E); and
   - a neural network (100) according to any of the claims 1 - 7,

   wherein the neural network (100) is configured to receive the sensor data (D) from the sensor data (D), and process the sensor data (D) to calculate one or more classification values (Cx,Cy,Cz) representing a respective classification of the events (E).

**9.** A method for classifying events (Ea,Eb) by means of the neural network (100) or system (1000) according to any of the preceding claims, the method comprising

- applying network input values associated with a sequence of events (Ea,Eb) to respective neurons (Na,Nb) at an input layer (10) of the neural network (100); and
- calculating network output values (Cx,Cy) of respective neurons (Nx,Ny) at an output layer (90) of the neural network (100), wherein the network output values (Cx,Cy) determine a classification of the sequence of events (Ea,Eb).

**10.** The method according to claim 9, wherein, for a respective event (Eb), exclusively output values corresponding to a subset of neurons affected by the event (Eb), are calculated, wherein the subset consist of those neurons which are directly connected in successive layers (20,30) to an input neuron (Nb) where the event (Eb) is received.

**11.** The method according to claim 9 or 10, wherein multiple events (Ea,Eb) are accumulated in different neurons at one or more of the network layers (10-90) before the network output values (Cx,Cy) are calculated.

**12.** A method for training the neural network (100) according to any of the preceding claims, the method comprising

- classifying events (Ea,Eb) according to any of claims 9 - 11; and
- adjusting learning parameters of the neural network (100) to optimize the classification (Cx,Cy).

**13.** The method according to claim 12, wherein, for a respective event (Eb), exclusively a subset of the learning parameters associated with a subset of the neurons affected by the event (Eb), is adjusted.

**14.** The method according to claim 12 or 13, wherein one or more time scale parameters ($\tau1,\tau2$) associated with the calculation of a time response of respective neuron output values (V1,V1') are variable in a training of the neural network.

**15.** A non-transitory computer-readable medium with software instructions that, when executed, causes performing the method according to any of claims 9 - 14.

FIG 1A

FIG 1B

100

$E_a (t_a)$

$E_b (t_b)$

N

N

N1

$\tau 1$

N2

$\tau 1$

$V_1$

$\Sigma$

N3

N1'

$\tau 2$

$V_1'$

N2'

$\tau 2$

$\Sigma$

N3'

**FIG 2A**

100

$\underline{N}$

$E_a (t_a)$

I1

N1

$\tau 1$

$V_1 (t_b - t_a)$

$E_b (t_b)$

I2

N2

$\tau 1$

$V_2$

$\Sigma$

I3

$\underline{N}$

N3

$\tau 2$

$V_3$

$\Sigma$

I7

$\underline{N}$

N7

$V_7$

$E_0 (t_0)$

I4

N4

$\tau 1$

V4

N0

$\tau 1$

$V_D$

$\Sigma$

I5

N5

$\tau 2$

$V_5 (t_b - t_0)$

$\Sigma$

I6

N6

$V_6$

**FIG 2B**

FIG 3

FIG 4

neuron N(g,f)

G

input response

initial state

V(tₙ)

input

I

$\dot{V}$

∫

integrator

output

V

F

time response

V

g(I)

I    I

t

FIG 5

FIG 6

**EUROPEAN SEARCH REPORT**

Europäisches
Patentamt
European
Patent Office
Office européen
des brevets

Application Number

EP 19 29 0004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERNHARD VOGGINGER ET AL: "Reducing the computational footprint for real-time BCPNN learning", FRONTIERS IN NEUROSCIENCE, vol. 9, 22 January 2015 (2015-01-22), XP055607344, CH ISSN: 1662-4548, DOI: 10.3389/fnins.2015.00002 * Abstract; Table 1; Sections 2.1.2, 2.3.1, 2.3.3, 2.3.3.1, 2.4.1, 4.3; Equations 2, 3, 32, 33, 34; figure 2 * | 1-15 | INV. G06N3/04 G06N3/08 G06N3/10 |
| A | JAMES C. KNIGHT ET AL: "Large-Scale Simulations of Plastic Neural Networks on Neuromorphic Hardware", FRONTIERS IN NEUROANATOMY, vol. 10, 7 April 2016 (2016-04-07), XP055474725, DOI: 10.3389/fnana.2016.00037 * Section 2 * | 1-15 | |

-----

-----

TECHNICAL FIELDS
SEARCHED      (IPC)

G06N

The present search report has been drawn up for all claims

| Place of search | Date of completion of the search | Examiner |
|---|---|---|
| The Hague | 23 July 2019 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)